# EUROPEAN PATENT APPLICATION

(11) **EP 1 675 373 A1**
(43) Date of publication of application: **28.06.2006**
(21) Application number: 04293121.2
(22) Date of filing: 23.12.2004
(51) Int. Cl.: H04M 3/56, H04M 7/00

(54) **Conferencing system for exchanging information between subscriber devices via a network unit using different modes**

(71) Applicant: ALCATEL, 75008 Paris (FR)
(72) Inventor: van Hoey, Gert, 9040 Sint-Amandsberg (BE)
(74) Representative: Narmon, Gisèle Marie Thérèse

(57) **Abstract**

Conferencing systems for exchanging conferencing information between subscriber devices (1-3) via network units (7) according to mode dependent manners get a more dynamic behavior by introducing controllers (6) for controlling the conferencing system for switching the subscriber devices (1-3) and the network unit (7) between different modes. This improves the efficiency of the conferencing systems. The subscriber devices (1-3) comprise at least two subscriber devices (1,2) and the network units (7) comprise reflectors (8) and mixers (9) for, in first modes, exchanging the conferencing information in a first manner between the subscriber devices (1,2) and for, in second modes, exchanging the conferencing information in a second manner between the subscriber devices (1,2) via the reflector (8) and for, in third modes, exchanging the conferencing information in a third manner between the subscriber devices (1,2) via the mixer (9). The first manner is a peer-to-peer manner, the second manner is a reflecting manner and the third manner is a mixing manner.

## Description

The invention relates to a conferencing system comprising subscriber devices and a network unit for exchanging conferencing information between the subscriber devices via the network unit according to mode dependent manners.

The subscriber devices for example comprise personal computers and/or modems and/or set top boxes, the network unit for example comprises an access network unit and/or a distribution network unit and/or a core network unit.

A prior art conferencing system is of common general knowledge. The subscriber devices exchange conferencing information for conferencing purposes via a network unit according to mode dependent manners. For example in a first conferencing mode, a first conferencing manner is used, such as each subscriber device transmitting one piece of conferencing information per time interval to the network unit, for each subscriber device, which network unit takes care of the distribution. For example in a second conferencing mode, a second conferencing manner is used, such as each subscriber device transmitting one piece of conferencing information per time interval to the network unit, for all other subscriber devices, which network unit takes care of the copying and of the distribution.

The known conferencing system is disadvantageous, inter alia, owing to the fact that it is relatively static. For example for getting an optimum efficiency, in a first situation, a first conferencing manner should be used and in a second situation, a second conferencing manner should be used. With the prior art conferencing system this is only possible by finishing a first conference based on the first conferencing manner and by starting a second conference based on the second conferencing manner.

It is an object of the invention, inter alia, to provide a conferencing system as defined above, which is relatively dynamic.

The conferencing system according to the invention is characterized in that the conferencing system comprises a controller for controlling the conferencing system for switching the subscriber devices and the network unit between different modes.

By introducing the controller, the subscriber devices and the network unit are switched between different conferencing modes. For example for getting an optimum efficiency, in a first situation, a first conferencing manner can be used and in a second situation, a second conferencing manner can be used, without the necessity to finish a first conference based on the first conferencing manner and to start a second conference based on the second conferencing manner. As a result, the conferencing system according to the invention is relatively dynamic.

The conferencing system according to the invention is further advantageous, inter alia, in that an optimal efficiency is reached.

An embodiment of the conferencing system according to the invention is characterized in that the controller comprises a detector for detecting at least one parameter for in response to a detection performing said controlling.

By introducing the detector, one or more parameters are detected, and the control of the conferencing system for switching the subscriber devices and the network unit depends on one or more detections.

An embodiment of the conferencing system according to the invention is characterized in that the subscriber devices comprise at least two subscriber devices and in that the network unit comprises a reflector and a mixer for, in a first mode, exchanging the conferencing information in a first manner between the subscriber devices and for, in a second mode, exchanging the conferencing information in a second manner between the subscriber devices via the reflector and for, in a third mode, exchanging the conferencing information in a third manner between the subscriber devices via the mixer.

The subscriber devices for example comprise personal computers and/or modems and/or set top boxes. For example in case of a relatively low number of subscriber devices participating in a conference, the first conferencing mode is to be preferred, in case of a relatively average number of subscriber devices participating in a conference, the second conferencing mode is to be preferred, and in case of a relatively high number of subscriber devices participating in a conference, the third conferencing mode is to be preferred. Further conferencing manners and further conferencing modes are not to be excluded.

An embodiment of the conferencing system according to the invention is characterized in that the first manner is a peer-to-peer manner, the second manner is a reflecting manner and the third manner is a mixing manner.

The peer-to-peer conferencing manner is a non-reflecting manner and a non-mixing manner, the reflecting conferencing manner is based on using a reflector and the mixing conferencing manner is based on using a mixer.

An embodiment of the conferencing system according to the invention is characterized in that the conferencing information comprises media streams and in that the at least one parameter comprises a number of subscriber devices participating in the exchanging of the conferencing information and/or a required upstream and/or downstream bandwidth per stream and/or an available upstream and/or downstream bandwidth per subscriber device.

For example in case of relatively little required and/or relatively much available bandwidth, the first conferencing mode is to be preferred, in case of relatively average required and/or relatively average available bandwidth, the second conferencing mode is to be preferred, and in case of relatively much required and/or relatively little available bandwidth, the third conferencing mode is to be preferred. A media stream comprises for example an audio stream and/or a video stream.

An embodiment of the conferencing system according to the invention is characterized in that the subscriber devices and the network unit are arranged to temporarily be in two different modes at the same time and in that the controller is arranged to control the subscriber devices and the network unit for temporarily being in the two different modes at the same time for avoiding a loss of the conferencing information.

By temporarily allowing two different conferencing modes to be used simultaneously and/or in parallel, a loss of the conferencing information resulting from going from one conferencing mode into an other conferencing mode is avoided.

An embodiment of the conferencing system according to the invention is characterized in that the subscriber devices and the network unit are arranged to be switched at a point in time and in that the controller is arranged to control the subscriber devices and the network unit for being switched at the point in time for avoiding a loss of the conferencing information.

By allowing the subscriber devices and the network unit to be switched at a predefined point in time, a loss of the conferencing information resulting from going from one conferencing mode into an other conferencing mode is avoided.

The invention also relates to a controller for use in the conferencing system as defined above, which controller is arranged to control the conferencing system for switching the subscriber devices and the network unit between different modes.

The invention also relates to a network unit for use in the conferencing system as defined above, which network unit is characterized in that the network unit is arranged to be switched between different modes by the controller for controlling the conferencing system for further switching the subscriber devices between the different modes.

The invention also relates to a subscriber device for use in the conferencing system as defined above, which subscriber device is characterized in that the subscriber device is arranged to be switched between different modes by the controller for controlling the conferencing system for further switching the network unit between the different modes.

The invention also relates to a method for use in a conferencing system comprising subscriber devices and a network unit for exchanging conferencing information between the subscriber devices via the network unit according to mode dependent manners, which method is characterized in that the method comprises a step of controlling the conferencing system for switching the subscriber devices and the network unit between different modes.

The invention also relates to a processor program product for use in a conferencing system comprising subscriber devices and a network unit for exchanging conferencing information between the subscriber devices via the network unit according to mode dependent manners, characterized in that the processor program product comprises a function of controlling the conferencing system for switching the subscriber devices and the network unit between different modes.

Embodiments of the controller according to the invention and of the network unit according to the invention and of the subscriber device according to the invention and of the mixer according to the invention and of the method according to the invention and of the processor program product according to the invention correspond with the embodiments of the conferencing system according to the invention.

The invention is based upon an insight, inter alia, that different situations require different mode dependent manners, and is based upon a basic idea, inter alia, that a controller should control the conferencing system for switching the subscriber devices and the network unit between different modes.

The invention solves the problem, inter alia, to provide a conferencing system as defined above, which is relatively dynamic, and is advantageous, inter alia, in that an optimal efficiency is reached.

These and other aspects of the invention will be apparent from and elucidated with reference to the embodiments(s) described hereinafter.
Fig. 1 shows diagrammatically a conferencing system according to the invention comprising a network unit according to the invention and subscriber devices according to the invention,
Fig. 2 shows diagrammatically a network unit according to the invention in greater detail, and
Fig. 3 shows diagrammatically a subscriber device according to the invention in greater detail.

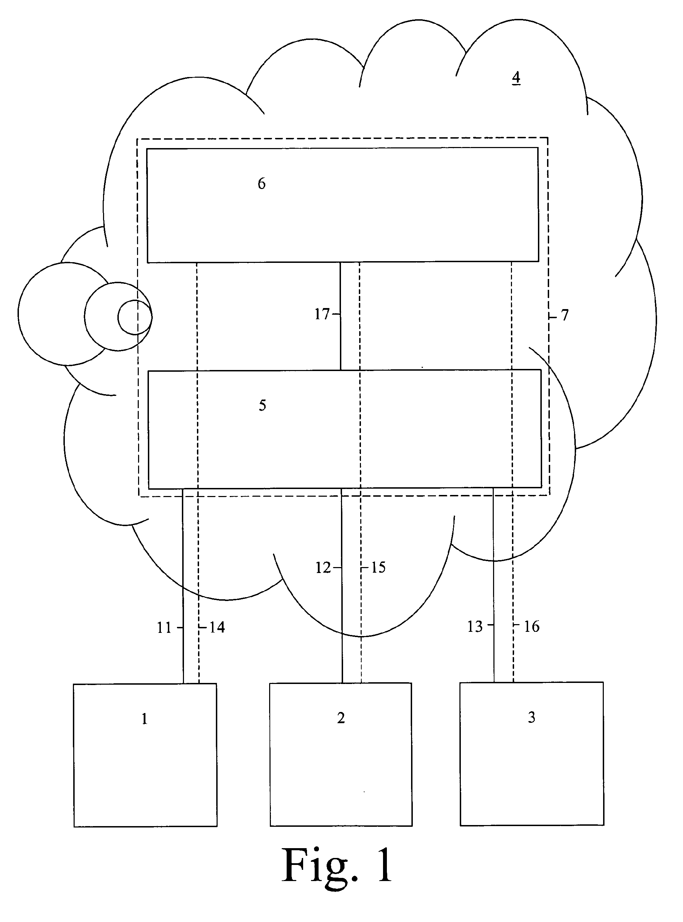

The conferencing system according to the invention shown in Fig. 1 comprises a network unit 7 according to the invention and subscriber devices 1-3 according to the invention. The subscriber devices 1-3 comprise a first subscriber device 1, a second subscriber device 2 and a third subscriber device 3. The network unit 7 comprises a switch 5 coupled to the first subscriber device 1 via a coupling 11 and coupled to the second subscriber device 2 via a coupling 12 and coupled to the third subscriber device 3 via a coupling 13. The network unit 7 further comprises a controller 6 coupled to the first subscriber device 1 via a coupling 14 and coupled to the second subscriber device 2 via a coupling 15 and coupled to the third subscriber device 3 via a coupling 16 and coupled to the switch 5 via a coupling 17. The network unit 7 according to the invention forms part of a network 4.

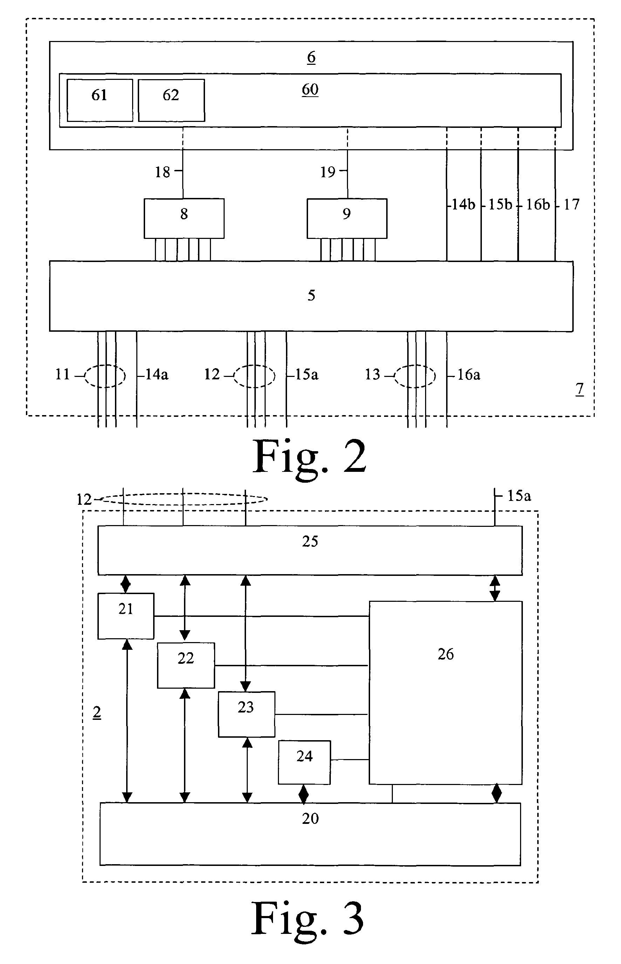

The network unit 7 according to the invention shown in Fig. 2 comprises the switch 5 coupled to the first subscriber device 1 via a coupling 11 comprising three sub-couplings and via a coupling 14a and coupled to the second subscriber device 2 via a coupling 12 comprising three sub-couplings and via a coupling 15a and coupled to the third subscriber device 3 via a coupling 13 comprising three sub-couplings and via a coupling 16a. The switch 5 is further coupled via four couplings 14b, 15b, 16b and 17 to the controller 6 and is further coupled via six sub-couplings to a reflector 8 and via six sub-couplings to a mixer 9. The reflector 8 is coupled via a coupling 18 to the controller 6 and the mixer 9 is coupled via a coupling 19 to the controller 6. The controller 6 comprises a processor/memory system 60 with a detector 61 and a generator 62.

The subscriber device 2 according to the invention in the form of a subscriber device comprises a processor/memory system 20 coupled to a first interface 21 and to a second interface 22 and to a third interface 23 and to a fourth interface 24 and to a instructor 26. The subscriber device 2 further comprises a transceiver 25 coupled to the three sub-couplings 12 and to the coupling 15a and further coupled to the first interface 21 and to the second interface 22 and to the third interface 23 and to the fourth interface 24 and to the instructor 26. This instructor 26 is further coupled to the interfaces 21-24 for controlling them and is further coupled to the processor/memory system 20 for being controlled. The couplings 14a (15a,16a) and 14b (15b,16b) together form the coupling 14 (15,16). The subscriber device 1,3 according to the invention is similar to the subscriber device 2 according to the invention described above.

In a prior art situation, the subscriber devices 1,2,3 exchange conferencing information for conferencing purposes via the network unit 7 according to mode dependent manners.

For example in a first conferencing mode, a first conferencing (peer-to-peer) manner is used, whereby each subscriber device 2 (1) (3) sends two media streams with conferencing information via for example the interfaces 21 and 22 and the transceiver 25 and via the switch 5 to the other subscriber devices 1,3 (2,3) (1,2). Thereto, these two media streams each comprise the source address of the sending subscriber device 2 and the destination address of the receiving subscriber device 1,3. And each subscriber device 2 (1) (3) receives two media streams with conferencing information from both other subscriber devices 1,3 (2,3) (1,2) via the switch 5 and via the transceiver 25 and for example the interfaces 23 and 24.

For example in a second conferencing mode, a second conferencing (reflecting) manner is used, whereby each subscriber device 2 (1) (3) sends one media stream with conferencing information via for example the interface 21 and the transceiver 25 and via the switch 5 and the reflector 8 to both other subscriber devices 1,3 (2,3) (1,2). Thereto, this one media stream comprises the source address of the sending subscriber device 2 and the destination addresses of the receiving subscriber devices 1,3 and the reflector 8 takes care of reflecting this one stream twice and removing one of both destination addresses per media stream. And each subscriber device 2 (1) (3) receives two media streams with conferencing information from both other subscriber devices 1,3 (2,3) (1,2) via the reflector 8 and the switch 5 and via the transceiver 25 and for example the interfaces 23 and 24.

Alternatively, it is also possible that the reflector knows the destination addresses of devices 1 and 3 (by configuration in advance). In that case, these addresses do not need to be sent in the conferencing stream itself.

For example in a third conferencing mode, a third conferencing (mixing) manner is used, whereby each subscriber device 2 (1) (3) sends one media stream with conferencing information via the interface 21 and the transceiver 25 and via the switch 5 to the mixer 9. Thereto, this one media stream comprises the source address of the sending subscriber device 2 and the destination addresses of the receiving subscriber devices 1,3. The mixer 9 mixes each pair of media streams and sends three mixed media streams with the proper destination address to the three subscriber devices 1,2,3. Each subscriber device 2 (1) (3) receives one mixed media stream with mixed conferencing information from the mixer 9 via the switch 5 and via the transceiver 25 and for example the interface 23. This is a relatively static conferencing system, owing to the fact that the conferencing system, per conference, is in one mode only for the entire conference.

According to the invention, the controller 6 is introduced, to make the conferencing system more dynamic. The controller 6 controls the conferencing system for switching the subscriber devices 1-3 and the network unit 7 between the different modes, as follows.

In case the conferencing system is in the first conferencing mode, a first conferencing (peer-to-peer) manner is used. The subscriber device 2 (1) (3) sends two media streams with conferencing information via the interfaces 21 and 22 and the transceiver 25 and via the switch 5 to both other subscriber devices 1,3 (2,3) (1,2) and each subscriber device 2 (1) (3) receives two media streams with conferencing information from both other subscriber devices 1,3 (2,3) (1,2) via the switch 5 and via the transceiver 25 and the interfaces 23 and 24. Then for example an operator decides that the conferencing system should go into the second conferencing mode.

Alternatively, for example the detector 61 detects at least one parameter such as for example a number of subscriber devices participating in the exchanging of the conferencing information and/or a required (upstream and/or downstream) bandwidth per stream and/or an available (upstream and/or downstream) bandwidth per subscriber device, and this at least one parameter requires the conferencing system to go into the second conferencing mode. For example in case of relatively little required and/or relatively much available bandwidth, the first conferencing mode is to be preferred, in case of relatively average required and/or relatively average available bandwidth, the second conferencing mode is to be preferred, and in case of relatively much required and/or relatively little available bandwidth, the third conferencing mode is to be preferred.

To bring the conferencing system from the first conferencing mode into the second conferencing mode, for example the generator 62 generates a first (second, third) device instruction to be supplied to the first (second, third) subscriber device 1 (2,3) via the coupling 14 (15,16) and generates a first reflector instruction to be supplied to the reflector 8 via the coupling 18 and generates a first switch instruction to be supplied to the switch 5 via the coupling 17.

The second subscriber device 2 receives the second device instruction via its instructor 26. This instructor 26 informs the processor/memory system 20 that - instead of two media streams each comprising the source address of the sending subscriber device 2 and the destination address of the receiving subscriber device 1,3 - only one media stream comprises the source address of the sending subscriber device 2 and the destination addresses of the receiving subscriber devices 1,3 is to be generated and that this one media stream is to be supplied via the interface 21 and the transceiver 25 and the switch 5 to the reflector 8. The instructor 26 further for example de-activates the interface 22.

Alternatively, it is also possible that the reflector knows the destination addresses of devices 1 and 3 (by configuration in advance). In that case, these addresses do not need to be sent in the conferencing stream itself.

In response to the first reflector instruction, the reflector 8 is activated, and in response to the first switch instruction, the switch 5 switches the media streams to and from the reflector 8 in a proper way.

To bring the conferencing system from the second conferencing mode into the third conferencing mode, for example the generator 62 generates a fourth (fifth, sixth) device instruction to be supplied to the first (second, third) subscriber device 1 (2,3) via the coupling 14 (15,16) and generates a second reflector instruction to be supplied to the reflector 8 via the coupling 18 and generates a first mixer instruction to be supplied to the mixer 9 via the coupling 19 and generates a second switch instruction to be supplied to the switch 5 via the coupling 17.

The second subscriber device 2 receives the fifth device instruction via its instructor 26. This instructor 26 informs the processor/memory system 20 that the one media stream comprising the source address of the sending subscriber device 2 and the destination addresses of the receiving subscriber devices 1,3 is to be generated and that this one media stream is to be supplied via the interface 21 and the transceiver 25 and the switch 5 to the mixer 9 instead of to the reflector 8. The instructor 26 further informs the processor/memory system 20 that - instead of receiving two media streams with conferencing information from both other subscriber devices 1,3 via the reflector 8 and the switch 5 and via the transceiver 25 and for example the interfaces 23 and 24 - only one mixed media stream with mixed conferencing information is going to be received from the mixer 9 via the switch 5 and via the transceiver 25 and for example the interface 23. The instructor 26 further for example de-activates the interface 24 and activates a de-mixing function in the interface 23.

Alternatively, it is also possible that the reflector knows the destination addresses of devices 1 and 3 (by configuration in advance). In that case, these addresses do not need to be sent in the conferencing stream itself.

In response to the second reflector instruction, the reflector 8 is deactivated, and in response to the first mixer instruction, the mixer 9 is activated, and in response to the second switch instruction, the switch 5 switches the media streams to and from the mixer 9 in a proper way.

A media stream comprises for example an audio stream and/or a video stream. When going from one conferencing mode to an other conferencing mode, a part of the audio and/or a part of the video may get lost. This however can be avoided advantageously, as follows.

According to a first possibility, the subscriber devices 1-3 and the network unit 7 are arranged to temporarily be in two different modes at the same time and the controller 6 is arranged to control the subscriber devices 1-3 and the network unit 7 for temporarily being in the two different modes at the same time for avoiding a loss of the conferencing information. Thereto, for example a device instruction instructs a subscriber device to go into a next mode without giving up a previous mode, until an other device instruction instructs the subscriber device to let the previous mode go.

According to a second possibility, the subscriber devices 1-3 and the network unit 7 are arranged to be switched at a point in time and the controller 6 is arranged to control the subscriber devices 1-3 and the network unit 7 for being switched at the point in time for avoiding a loss of the conferencing information. Thereto, for example a device instruction instructs a subscriber device to go into a next mode at a predefined point in time, whereby either the subscriber devices and the controller and the reflector and the mixer have synchronized clocks or the instructions carry precise timing information.

The controller, the switch, the reflector and the mixer form part of one network unit or may form part of more than one network unit. The subscriber device may comprise more interfaces or less interfaces, each interface may have one function or more functions, the instructor may form part of the processor/memory system and/or of the interfaces. The detector and the generator in the processor/memory system in the controller may also be separated from the processor/memory system. Each block may be hardware, software or a mixture of both. The instructions are just examples, other ways for controlling the system may be used, and the addresses might be replaced by codes. Each coupling may be divided into sub-couplings and sub-couplings and/or couplings may be combined into one or more further couplings.

The expression "for" in for example "for exchanging" and "for controlling" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.
The steps/functions of controlling do not exclude further steps/functions, like for example, inter alia, the steps/functions described for the Figures.

## Claims

1. Conferencing system comprising subscriber devices (1-3) and a network unit (7) for exchanging conferencing information between the subscriber devices (1-3) via the network unit (7) according to mode dependent manners, **characterized in that** the conferencing system comprises a controller (6) for controlling the conferencing system for switching the subscriber devices (1-3) and the network unit (7) between different modes.

2. Conferencing system as defined in claim 1, **characterized in that** the controller (6) comprises a detector (61) for detecting at least one parameter for in response to a detection performing said controlling.

3. Conferencing system as defined in claim 2, **characterized in that** the subscriber devices (1-3) comprise at least two subscriber devices (1,2) and **in that** the network unit (7) comprises a reflector (8) and a mixer (9) for, in a first mode, exchanging the conferencing information in a first manner between the subscriber devices (1,2) and for, in a second mode, exchanging the conferencing information in a second manner between the subscriber devices (1,2) via the reflector (8) and for, in a third mode, exchanging the conferencing information in a third manner between the subscriber devices (1,2) via the mixer (9).

4. Conferencing system as defined in claim 3, **characterized in that** the first manner is a peer-to-peer manner, the second manner is a reflecting manner and the third manner is a mixing manner.

5. Conferencing system as defined in claim 3, **characterized in that** the conferencing information comprises media streams and **in that** the at least one parameter comprises a number of subscriber devices (1,2) participating in the exchanging of the conferencing information and/or a required upstream and/or downstream bandwidth per stream and/or an available upstream and/or downstream bandwidth per subscriber device (1,2).

6. Conferencing system as defined in claim 2, 3, 4 or 5, **characterized in that** the subscriber devices (1-3) and the network unit (7) are arranged to temporarily be in two different modes at the same time and **in that** the controller (6) is arranged to control the subscriber devices (1-3) and the network unit (7) for temporarily being in the two different modes at the same time for avoiding a loss of the conferencing information.

7. Conferencing system as defined in claim 2, 3, 4 or 5, **characterized in that** the subscriber devices (1-3) and the network unit (7) are arranged to be switched at a point in time and **in that** the controller (6) is arranged to control the subscriber devices (1-3) and the network unit (7) for being switched at the point in time for avoiding a loss of the conferencing information.

8. Controller (6) for use in the conferencing system as defined in claim 1, which controller (6) is arranged to control the conferencing system for switching the subscriber devices (1-3) and the network unit (7) between different modes.

9. Network unit (7) for use in the conferencing system as defined in claim 1, **characterized in that** the network unit (7) is arranged to be switched between different modes by the controller (6) for controlling the conferencing system for further switching the subscriber devices (1-3) between the different modes.

10. Subscriber device (1-3) for use in the conferencing system as defined in claim 1, **characterized in that** the subscriber device (1-3) is arranged to be switched between different modes by the controller (6) for controlling the conferencing system for further switching the network unit (7) between the different modes.

11. Method for use in a conferencing system comprising subscriber devices (1-3) and a network unit (7) for exchanging conferencing information between the subscriber devices (1-3) via the network unit (7) according to mode dependent manners, **characterized in that** the method comprises a step of controlling the conferencing system for switching the subscriber devices (1-3) and the network unit (7) between different modes.

12. Processor program product for use in a conferencing system comprising subscriber devices (1-3) and a network unit (7) for exchanging conferencing information between the subscriber devices (1-3) via the network unit (7) according to mode dependent manners, **characterized in that** the processor program product comprises a function of controlling the conferencing system for switching the subscriber devices (1-3) and the network unit (7) between different modes.
